# EUROPÄISCHE PATENTSCHRIFT

(11) **EP 3 167 119 B1**
(45) Veröffentlichungstag und Bekanntmachung des Hinweises auf die Patenterteilung: **09.11.2022**
(21) Anmeldenummer: 15744482.9
(22) Anmeldetag: 10.07.2015
(51) Int. Cl.: D21H 27/24, B32B 29/00, D21H 27/26, D21H 27/28, D21H 17/37, D21H 17/46, D21H 17/51, D21H 17/58, D21H 19/38, D21H 19/40, D21H 19/56, D21H 19/62

(54) **ELASTISCHE LAMINAT-DECKSCHICHTEN UMFASSEND EINEN SEPARATEN OBERFLÄCHENANSTRICH**
COVERING LAYERS FOR ELASTIC LAMINATE THAT COMPRISE A SEPARATE SURFACE COATING
COUCHES DE RECOUVREMENT DE STRATIFIÉ, ÉLASTIQUES, COMPRENANT UN REVÊTEMENT DE SURFACE SÉPARÉ

(30) Priorität: 11.07.2014 DE 102014010252
(43) Veröffentlichungstag der Anmeldung: 17.05.2017
(73) Patentinhaber: Metall-Chemie Technologies GmbH, 20097 Hamburg (DE)
(72) Erfinder: KIPPHARDT, Helmut, 22539 Hamburg (DE); SCHAAL, Oliver, 57339 Erndtebrück (DE)
(74) Vertreter: Hamm&Wittkopp Patentanwälte PartmbB
(86) Internationale Anmeldenummer: PCT/EP2015/001414
(87) Internationale Veröffentlichungsnummer: WO 2016/005058

(56) Entgegenhaltungen:
- EP-A1- 2 006 447
- WO-A1-2005/023561
- CA-A1- 2 840 677
- DE-A1- 2 440 271
- DE-A1- 10 331 484
- US-A1- 2011 305 887

## Beschreibung

Die Erfindung betrifft ein Verfahren zur Herstellung von elastischen Laminat-Deckschichten in Form von behandelten Overlay- oder Dekorpapieren, die als Außenschicht für eine einen Plattengrundkörper aufweisende Schichtplatte (wie z.B. dekorative Fußbodenbelags-, Wand- oder Deckenverkleidungsplatten (für den Innen- und Außenbereich), Möbelbauteile und -beläge, Gebäude-, Abdeck- oder Trockenausbauplatten, Fassaden-, Paneel- oder Dielenelemente, Sichtblenden etc.) Verwendung finden. Zudem betrifft die vorliegende Erfindung die durch dieses Verfahren erhältlichen elastischen Laminat-Deckschichten selbst, deren Verwendung als Außenschicht bei der Herstellung der vorgenannten Schichtplatten sowie die unter Verwendung der erfindungsgemäßen elastischen Laminat-Deckschichten erhältlichen Schichtplatten.

Das Verfahren zur Herstellung der erfindungsgemäßen elastischen Laminat-Deckschichten umfasst wenigstens die folgenden Schritte:
a) Imprägnieren eines Trägergewebes mit einer ersten geeigneten Harzmischung,
b) einseitiger Auftrag einer zweiten Harzmischung als Oberflächenanstrich umfassend einen Quervernetzer sowie ein über reaktive Endgruppen quervernetzbares Pre-Polymer,
c) Quervernetzung des über reaktive Endgruppen quervernetzbaren Pre-Polymers und
d) Trocknung der elastischen Laminat-Deckschicht.

Durch die mit dem erfindungsgemäßen Verfahren erhältlichen Laminat-Deckschichten wird ein Laminat zur Verfügung gestellt, das mit seiner elastische Außenseite nicht nur ein für den Benutzer angenehmes und im Vergleich zu bekannten Laminaten ansprechendes Laufgefühl sowie eine gute Haptik ergibt. Zudem kommt es, in Abhängigkeit von der Auswahl der in dem erfindungsgemäßen Verfahren verwendeten Pre-Polymere zu einer deutlichen Tritt- und Gehschallreduzierung, was z.B. die Verwendung von unterseitigen Trittschalldämmplatten, die bei der Verarbeitung von herkömmlichen Laminatbodenpaneelen mit einer Außenschicht aus Melamin/Formaldehyd-Kondensationsharz (MF) regelmäßig zu verwenden sind, vermeidbar macht. Durch die Elastizität der Oberfläche der erfindungsgemäßen Deckschicht verbessern sich auch die Eigenschaften bezüglich Druck- und Stoßbeanspruchung der Produkte, und die Elastizität der Oberfläche bzw. die Verwendung der erfindungsgemäßen elastischen Deckschichten führt zu einer für den Benutzer spürbaren, angenehmen Fußwärme. Bei Verwendung der erfindungsgemäßen elastischen Deckschichten als Oberfläche von z.B. Möbelbauteilen ergibt sich eine für den Benutzer überaus angenehme Haptik.

Im Vergleich zu herkömmlichen Laminatböden - insbesondere auch bei solchen mit einer Nutzschicht aus MF - ergeben sich durch die Verwendung der erfindungsgemäßen elastischen Deckschichten wesentliche Vorteile. Bei "harten" Laminatböden können bei einer entsprechenden Belastung in der Oberfläche des Laminats Risse entstehen, so dass ein möglicher Feuchtigkeitseintritt und/oder Absplitterungen aus der Oberfläche das Laminat in der Nutzung einschränken. Aufgrund der Elastizität der erfindungsgemäßen Deckschichten ergeben sich diese Probleme vorliegend nicht. Darüber hinaus ist bei einer "weichen" oder elastischen Deckschicht ein scharfer Kantenschnitt möglich, so dass der sich beim Schneiden von "harten" Laminatplatten ergebende Weißbruch nicht auftritt. Darüber hinaus können bei Einsatz der erfindungsgemäßen elastischen Deckschichten Abplatzungen an den Rändern weitgehend vermieden werden. Beim Schneiden einzelner Paneele ergeben sich somit keine Beeinträchtigungen, und es entsteht ein durchgängig befriedigender optischästhetischer Eindruck.

Elastische Laminat-Deckschichten umfassend eine Funktions- und eine separat aufgebrachte Nutzschicht, die als Außenschicht zur Herstellung von Laminatbodenpaneelen verwendet werden können, sind bereits aus EP 2 263 867 und DE 10 2013 007 236 bekannt. Die von EP 2 263 867 und DE 10 2013 007 236 beschriebenen elastischen Deckschichten werden jedoch, technisch relativ anspruchsvoll dadurch erhalten, dass auf ein ggf. nur teilweise imprägniertes Papier in einem separaten und sequentiell durchgeführten Schritt eine Folie extrudiert wird. Auch diese aus dem Stand der Technik bekannten Deckschichten werden im Weiteren nach bekannten Methoden zu Laminaten, wie etwa Fußbodenpaneelen, verarbeitet. Dabei wird der Gesamtverbund aus Deckschicht, ggf. einem Dekorpapier, einem Plattengrundkörper und einem Gegenzug durch Heißverpressung mittels einer Presse zu einem Laminat verpresst. Bei Verwendung eines separaten Dekorpapiers muss die Deckschicht, in diesem Fall ein Overlay-Papier, zwingend transparent sein, und bei Verwendung der aus dem Stand der Technik bekannten Overlay-Papiere in den aus dem Stand der Technik bekannten Verfahren kommt es häufig zu einer problematischen Blasenbildung sowohl innerhalb als auch unterhalb des Overlay-Papiers und zu entsprechenden Transparenzstörungen sowie zu einem Verkleben des Laminats mit den Pressblechen der Presse.

DE 24 40 271 A1 beschreibt Verfahren zur Herstellung einer Rückenbeschichtung von Bodenbelägen, wobei zu deren Herstellung eine Mischung einer Polyol-Komponente und einer Polyisocyanat-Komponente als "schaumfahiger Hauptstrich" auf ein Trägermaterial aufgebracht und dort zur Reaktion gebracht wird. Die Rohkomponenten werden unter Zugabe von Wasser und ggf. eines Katalysators bei erhöhter Temperatur zur Reaktion gebracht, wobei sich dabei erst (unter Kohlendioxid-Abgabe) ein geschäumtes Polyurethan bildet.

US 2011/0305887 A1 beschreibt zur Herstellung eines kratz- und scheuerbeständigen Bodenbelags den mehrschichtigen Auftrag eines Silikonharzes, ohne dass zwischen den einzelnen Schichten eine Quervernetzung stattfindet.

Gemäß WO 2005/023561 A1 können die auf ein Trägermaterial aufgebrachten Schichten "Quervernetzungsregulatoren" enthalten, dabei findet die Quervernetzung ausschließlich innerhalb der einzelnen Schichten statt und eine Verbindung der Schichten untereinander unterbleibt.

EP 2 006 447 A1 beschreibt die Herstellung einer abriebfesten Dekorfolie, die als Overlay eines Möbel- oder Fußbodenlaminats Verwendung finden kann, wobei zwischen der Dekorpapierschicht und einer äußeren Papierschicht eine Schicht mit einem abriebfesten Material eingebracht ist.

DE 103 31 484 A1 und CA 2 840 677 betreffen Polyurethan-Polymer-Hybrid-Polymere mit verbesserten Oberflächeneigenschaften bzw. geräuschdämpfenden Eigenschaften.

Die vorliegende Erfindung macht es sich zur Aufgabe eine neue Form einer Laminat-Deckschicht bereitzustellen, die bei Verwendung eines separaten Dekorpapiers (wenn die Laminat-Deckschicht als Overlay-Papier fungiert) vollständig transparent ist, bei deren Verwendung in jedem Fall (auch, wenn die erfindungsgemäße Laminat-Deckschicht selbst ein Dekorpapier umfasst) Blasenbildung gänzlich unterbleibt und die nicht zu einem Ankleben des Laminats an den Presseplatten führt. Darüber hinaus erlaubt die vorliegende Erfindung die Bereitstellung von Laminat-Deckschichten, die extrem fest mit den anderen Komponenten des Laminats verbunden und dazu noch chemikalien-, scheuer-, kratz- und lichtbeständig sind. Das erfindungsgemäße Verfahren erlaubt die Vermeidung ökologisch problematischer Verbindungen und Zusätze, wie etwa PVC, Weichmachern, Antioxidantien und UV-Stabilisatoren, wobei z.B. durch die Vermeidung von Weichmachern die erfindungsgemäßen Overlay-Papiere nicht beschlagend (*non-fogging*) wirken; d.h. es entweichen keine flüchtigen Komponenten (z.B. Weichmacher auf Phthalat-Basis), die sich regelmäßig bei Verwendung von herkömmlichen Laminat-Deckschichten auf Fensterscheiben, Wänden und Tapeten niederschlagen. Schließlich können die erfindungsgemäßen Laminat-Deckschichten durch technisch einfache, kostengünstige und mit der bevorzugten Verwendung von rein wässrigen Systemen ökologisch unbedenklichen Methoden hergestellt und zu Laminaten verarbeitet werden.

Ein Aspekt der vorliegenden Erfindung besteht somit in der Bereitstellung einer haptisch anspruchsvollen, "weichen" Oberfläche, die einerseits, durch Vermeidung von PVC, chlorfrei und andererseits weichmacherfrei ist. Durch die Bereitstellung eines chlorfreien Produktes ergibt sich einerseits (z.B. in Zusammenhang mit der Abfall-Entsorgung) ein ökologisch unbedenkliches Material, das die aus dem Stand der Technik bekannten Probleme der Verwendung von PVC vollumfänglich vermeidet. Zudem werden die von weichmacherhaltigen Oberflächen bekannten Probleme vermieden, die sich aus dem Abdampfen des Weichmachers aus herkömmlichen "weichen" Materialien, wie etwa den aus dem Stand der Technik bekannten Folien, ergeben; insbesondere sind die durch die vorliegende Erfindung zur Verfügung gestellten, als Außenschichten der Laminate zu verwendenden Deckschichten beschlagfrei (*non-fogging*)*.* Unter Verwendung entsprechender Pre-Polymere können die verwendeten Harzmischungen frei von Antioxidantien, Weichmachern und UV-Stabilisatoren formuliert werden, und die damit erhältlichen Laminat-Deckschichten sind trotzdem vollständig transparent, oxidationsstabil und lichtecht; die UV-Stabilität (also Lichtechtheit) der erfindungsgemäßen Deckschichten wird insbesondere dadurch erzielt, dass wenigstens die zweite, für den Oberflächenanstrich verwendete Harzmischung frei von durch UV-Strahlung zur Vergilbung neigenden Pre-Polymeren ist; hierfür sind insbesondere Pre-Polymere aus rein-aliphatischen Polyurethanen und Pre-Polymere aus Polyurethanen geeignet, die auf Tetramethylxytylendiisocyanat (TMXDI) basieren. Besonders bevorzugt ist sowohl die erste, für die Imprägnierung als auch die zweite, für den Oberflächenanstrich verwendete Harzmischung frei von durch UV-Strahlung zur Vergilbung neigenden Pre-Polymeren.

Ein weiterer Aspekt der vorliegenden Erfindung besteht in der Bereitstellung von elastischen Laminat-Deckschichten, die durch ein technisch einfaches, kostengünstiges und umweltfreundliches Verfahren hergestellt werden können. Hierzu erlaubt der gesamte Aufbau der erfindungsgemäßen Laminat-Deckschichten die Herstellung in aus dem Stand der Technik bekannten Auftragswerken, in dem zunächst im ersten Schritt eine Tauchimprägnierung, d.h. eine vollständige Tränkung des Trägergewebes mit einem geeigneten Harzsystem erfolgt. Mögliche Trägergewebe sind einerseits Zellstoffbahnen mit Flächengewichten von etwa 20 bis 150 g/m², die z.B. aus Zellstoff oder alpha-Cellulose bestehen und auch eingearbeitetes Korund aufweisen können. Solche Trägergewebe ergeben durch Anwendung des erfindungsgemäßen Verfahrens ein vollständig transparentes Overlay-Papier. Andererseits kann das im erfindungsgemäßen Verfahren verwendete Trägergewebe auch ein unbedrucktes, (z.B. mittels Digitaldruck) farbig bedrucktes oder durchgefärbtes Dekorpapier sein.

Das zur Tauchimprägnierung eingesetzte geeignete Harzsystem liegt in Form einer Lösung, Emulsion oder Dispersion eines geeigneten Harzsystems in Wasser oder einem organischen Lösungsmittel vor; bevorzugt handelt es sich bei dem zur Tauchimprägnierung eingesetzten geeigneten Harzsystem um eine wässrige Dispersion. Das geeignete Harzsystem kann neben geeigneten Harzen und Pre-Polymeren harte Partikel, Quervernetzer sowie Hilfsstoffe, wie etwa ein Netz/Trennmittel oder einen Entschäumer, enthalten; bevorzugt ist es frei von Weichmachern, Antioxidantien und UV-Stabilisatoren.

Mittels allgemein bekannter Methoden wird nach der Tauchimprägnierung überschüssiges Harz etwa mittels Metallrakeln oder Dosierwalzen abgezogen und das imprägnierte Gewebe ggf. einer Zwischentrocknung unterzogen. Die optionale Zwischentrocknung erfolgt bevorzugt bis zu einer Restfeuchte von 5 bis 25%.

Auf das so erhaltene Vorimprägnat wird einseitig (z.B. durch einen Rasterwerkauftrag) ein zweites Harzsystem als Oberflächenanstrich aufgetragen. Das zum Oberflächenanstrich eingesetzte Harzsystem liegt in Form einer Lösung, Emulsion oder Dispersion in Wasser oder einem organischen Lösungsmittel vor; bevorzugt handelt es sich bei dem zum Oberflächenanstrich eingesetzten Harzsystem um eine wässrige Dispersion. Das zum Oberflächenanstrich eingesetzte Harzsystem enthält über reaktive Endgruppen vernetzbare Pre-Polymere sowie mindestens einen Quervernetzer, und es kann harte Partikel sowie Hilfsstoffe, wie etwa ein Netz/Trennmittel oder einen Entschäumer, aufweisen; bevorzugt ist auch das zum Oberflächenanstrich eingesetzte Harzsystem frei von Weichmachern, Antioxidantien und UV-Stabilisatoren. Die Dosierung des Oberflächenanstrichs erfolgt z.B. durch Rasterwalzen. Durch Reaktion der reaktiven Endgruppen mit dem im zweiten Harzgemisch enthaltenen Quervernetzer kommt es insbesondere während der anschließenden Trocknung des imprägnierten und mit einem Oberflächenanstrich versehenen Gewebes zu einer Quervernetzung des über reaktive Endgruppen vernetzbaren Pre-Polymers.

Die für den Oberflächenanstrich verwendete, zweite Harzmischung umfasst ein über reaktive Endgruppen quervernetzbares Pre-Polymer und einen Quervernetzer sowie - jeweils optional - weitere Hilfsstoffe (wie etwa ein Netz/Trennmittel oder einen Entschäumer) und harte Partikel. Zudem kann die zweite Harzmischung auch ein ein separates Netzwerk ausbildendes System (z.B. eine Kombination von Diketoacrylamid und Adipinsäuredihydrazid) enthalten. Die in den Harzmischungen in Form von entsprechenden Dispersionen enthaltenen Pre-Polymere sind polymere Verbindungen, die nach Auftrag der Harzmischungen durch weitere Reaktionen einen höheren Polymerisationsgrad erreichen. Die über reaktive Endgruppen quervemetzbaren Pre-Polymere können z.B. Polyurethane (PUR), Polyacrylate, Polyharnstoffe sowie entsprechende Copolymere oder Hybride von Polyurethanen oder Polyurethan-Copolymeren mit Polyacrylaten sein. Bevorzugt handelt es sich bei den über reaktive Endgruppen quervernetzbaren Pre-Polymeren um Polyurethan-Polyacrylat-HybridPolymere, Polyurethan-Polyharnstoff-Copolymere oder Kombinationen davon. Im Fall von Polyurethan-Polyacrylat-Hybridpolymeren kann das Polyurethan/Polyacrylat-Verhältnis (Gew.-%/Gew.-%, bezogen auf den Festharzgehalt der verwendeten Dispersionen) zwischen 95:5 und 5:95 liegen; bevorzugt liegt das Verhältnis zwischen 50:50 und 30:70, besonders bevorzugt liegt das Verhältnis zwischen 20:80 und 10:90.

Die reaktiven Endgruppen der quervernetzbaren Pre-Polymere sind insbesondere Amino- (-NH₂ und -NHR), Hydroxy- (-OH), Carboxy/Carboxylat- (-COOH/-COO⁻) sowie Mercaptogruppen (-SH). Bevorzugt sind die reaktiven Endgruppen der quervernetzbaren Pre-Polymere primäre Aminogruppen (-NH₂), Hydroxygruppen (-OH) und Carboxy/Carboxylat-Gruppen (-COOH und -COO⁻). Im Gegensatz zu solchen geeigneten reaktiven Endgruppen weisen die erfindungsgemäß zu verwendenden Harze und Pre-Polymere keine unter Freisetzung von Gasen reagierende Endgruppen auf; insbesondere stellen im Fall der Verwendung von Polyurethan-Pre-Polymeren Isocyanat-Endgruppen keine geeigneten reaktive Endgruppen dar. Die über reaktive Endgruppen quervernetzbaren Pre-Polymere sind insbesondere Polymere, Copolymere und Hybride von über primäre Aminogruppen (-NH₂) vernetzbaren Polyurethanen und/oder von über OH-Gruppen vernetzbaren Polyacrylaten. Ganz bevorzugt handelt es sich bei den über reaktive Endgruppen quervernetzbaren Pre-Polymeren um über NH₂-Gruppen quervernetzbare Polyurethane, um über OH-Gruppen quervernetzbare Polyacrylate oder um Polyurethan-Polyacrylat-Hybridpolymere, deren Polyurethane über NH₂-Gruppen und/oder deren Polyacrylate über OH-Gruppen quervernetzbar sind. Gebrauchsfertige Polyurethan/Polyacrylat-Hybrid-Pre-Polymere, die ein über NH₂-Gruppen quervernetzbares Polyurethan enthalten werden unter Bezeichnung Ecronova ET 2012 und Ecronova ET 4075 vermarktet. Ein über OH-Gruppen quervenetzbares Polyacrylat-Pre-Polymer ist als Ecronova Ecrylic RA646A erhältlich.

Geeignete Harze und Pre-polymere für die Tauchimprägnierung sind grundsätzlich alle Produkte, die mit dem Oberflächenanstrich eine physikalische und/oder eine chemische Verbindung eingehen können. Hierzu zählen unter Anderem Polyurethane (PUR), inklusive Polyurethan-Copolymere, Polyurethan-Polyacrylat-Hybride und Mischungen davon, Polyacrylate, inklusive Polyacrylat-Copolymere, Polyacrylat/Polyurethan-Hybride und Mischungen davon, modifizierte Melamin-Harze, Polyharnstoffe, inklusive Copolymere und Mischungen davon, Polyacrylamide, inklusive Polyacrylat-Copolymere und Mischungen davon, Polyethylenevinylalkohol, Polyethylenvinylacetat, Epoxy-Harze und Silikone. Gebrauchsfertige Dispersionen von nicht weiter über funktionelle Gruppen quervernetzbaren Polyurethan- und Polyacrylat- Polymerdispersionen, die durch Verwendung eines Quervernetzers, z.B. eines Isocyanates, ein Polyurethan/Polyacrylat/Polyharnstoff-interpenetrating network-Polymer ergeben sind kommerziell unter den Bezeichnungen Bayer Impranil DLC-F (Polyurethan-Polymer) bzw. Helios Domemul 7960 (Polyacrylat-Polymer) erhältlich.

Durch das Eindringen von Pre-Polymeren und dem Quervernetzer aus dem Oberflächenanstrich in die Oberfläche des Vorimprägnats und die anschließende Vernetzung der reaktiven Endgruppen kommt es durch Ausbildung eines Hybrid-Polymers zu einer festen physikalischen Verbindung zwischen der als Vorimprägnat eingebrachten Funktionsschicht und der als Oberflächenanstrich aufgebrachten Nutzschicht. Geeignete Harze und Pre-polymere für die Tauchimprägnierung sind bevorzugt solche, die über eigene reaktive Gruppen (z.B. NH₂-, OH-, COOH oder SH-Gruppen) eine über den Quervernetzer vermittelte chemische Binding mit den über reaktive Endgruppen vernetzbaren Pre-Polymeren des im Oberflächenanstrich verwendeten Harzsystems eingehen können; besonders bevorzugte geeignete Harze und Pre-polymere für die Tauchimprägnierung sind MF-Polymere, Polyacrylate und Polyurethane, wobei die Polyurethane und Polyacrylate besonders bevorzugt über reaktive Endgruppen quervernetzbar sind. Erfindungsgemäß ist es ganz besonders bevorzugt, für die Imprägnierung Harzmischungen zu verwenden, die über NH₂-Gruppen quervernetzbare Polyurethane oder über OH-Gruppen quervernetzbare Polyacrylate (ggf. in Form von Mischungen, Co-Polymeren oder Polyurethan/Polyacrylat-Hybriden) umfassen. Erfindungsgemäß werden Polyurethan/Polyacrylat-Hybride bevorzugt verwendet, deren Polyurethan-Anteil über NH₂-Gruppen quervernetzbar und/oder deren Polyacrylat-Anteil über OH-Gruppen quervernetzbar ist.

Als Quervernetzer eignen sich erfindungsgemäß Isocyanate, Epoxide und Aziridine; bevorzugt sind wasserdispergierbare Di- bis Polyisocyanate, wasserdispergierbare Di- bis Polyepoxide sowie wasserdispergierbare Di- bis Polyaziridine. Erfindungsgemäß können als Quervernetzer auch blockierte Isocyanate verwendet werden, die während der Trocknung deblockieren und eine Quervernetzung herbeiführen. Erfindungsgemäß besonders bevorzugt sind wasserdispergierbare Di- bis Polyisocyanate. Mögliche Quervernetzer werden kommerziell z.B. unter den Bezeichnungen Dancure 101 (aliphatisches Polyisocyanat), Bayhydur XP 2655 (aliphatisches Polyisocyanat auf Basis von Hexamethylendiisocyanat) und Desmodur DN (hydrophiles, aliphatisches Polyisocyanat auf Basis von Hexamethylendiisocyanat) vermarktet. Der Anteil des Quervemetzers in der ersten und der zweiten Harzmischung kann 0,5-50 Gew.-% (flüssig-flüssig), bevorzugt 5-25 Gew,-% (flüssig-flüssig) und besonders bevorzugt 0,5-10 Gew.-% (flüssig-flüssig), betragen.

Sowohl die Fuktions- als auch die Nutzschicht der erfindungsgemäßen Laminat-Deckschichten können harte Partikel aus Korund, Siliciumcarbid oder Titannitrid enthalten; bevorzugt sind die harte Partikel silanisiert. Die harten Partikel können bereits in den beim Auftrag der Tauchimprägnierung und/oder beim Auftrag des Oberflächenanstrichs eingesetzten Harzmischungen enthalten sein oder nach deren Auftrag aufgestreut werden. Dabei eignen sich, wie aus dem Stand der Technik bekannt, feine Partikel mit einer durchschnittlichen Partikelgröße von 0,5 bis 30 µm zur Verbesserung der Scheuerfestigkeit und grobe Partikel mit einer durchschnittlichen Partikelgröße von 30 bis 150 µm zur Verbesserung der Abriebfestigkeit. Bevorzugt enthält die zur Tauchimprägnierung eingesetzte Harzmischung grobe Partikel und die für den Oberflächenanstrich verwendete Harzmischung feine Partikel. Alternativ können grobe Partikel nach dem Auftrag der ersten und/oder feine Partikel nach dem Auftrag der zweiten Harzmischung und vor der jeweiligen (Zwischen)-Trocknung aufgestreut werden.

Das Verfahren kann auf einem technisch sehr einfachen Aufbau durchgeführt werden und stellt elastische Laminat-Deckschichten zur Verfügung, wobei die ggf. chemikalien-, scheuer- und kratzbeständige Oberfläche (die Nutzschicht) nicht als separate Folie sequentiell aufgebracht werden muss, und wobei die Nutzschicht unter Vermeidung von Klebstoffen und Haftvermittlern eine extrem feste Verbindung zum imprägnierten Kern (der Funktionsschicht) der Deckschicht eingeht. Dies wird dadurch gewährleistet, dass die im Oberflächenanstrich verwendeten Polymere über reaktive Endgruppen quervernetzbar sind und physikalische Bindungen und/oder über einen im Oberflächenanstrich enthaltenen Quervernetzer chemische Bindungen mit dem zur Imprägnierung eingesetzten Polymer eingehen; bevorzugt erfolgt auch eine über den Quervernetzer verinittelte chemische Bindung zwischen den Polymeren aus der für den Oberflächenanstrich eingesetzten zweiten Harzmischung und dem Material in der zur Imprägnierung verwendeten ersten Harzmischung.

Die durch das erfindungsgemäße Verfahren erhältlichen elastischen Laminat-Deckschichten werden als Dekor und/oder Schutzschichten für Flächen, insbesondere als Außenschicht bei der Herstellung von neuartigen Laminatpaneelen, genutzt. Hierbei werden die durch das erfindungsgemäße Verfahren erhältlichen Deckschichten nach üblichen Verfahren auf geeignete Trägersysteme (z.B. HDF-, MDF-, Span-, Sperrholz- und OSB-Platten, Furniere, mineralische Platten, Kunststoffmaterialien, Metalle, Gips oder dergleichen sowie Kompositmaterialien etc.) appliziert. Bevorzugt weist der Plattengrundkörper auf gegenüberliegenden Seiten sogenannte Click-Verbindungsprofile auf, die in Art eines Nut-Feder-Systems funktionieren. Durch die spezifische Ausgestaltung des erfindungsgemäßen Deckschichten weisen derartige Paneele erhebliche Vorteile gegenüber klassischen Laminatpaneelen auf.

Die erfindungsgemäßen Laminat-Deckschichten werden nach bekannten Methoden zu Schichtaufbauten (Laminaten), wie etwa Fußbodenpaneelen, verarbeitet. Dabei wird der Gesamtverbund aus Deckschicht, ggf. einem Dekorpapier, einem Plattengrundkörper und einem Gegenzug durch Heißverpressung mittels einer Presse zu einem Laminat verpresst. Bei Verwendung eines separaten Dekorpapiers ist die in diesem Fall als Overlay-Papier fungierende erfindungsgemäße Laminat-Deckschicht vollständig transparent und lichtecht; alternativ kann ein bevorzugt digital bedrucktes oder ein ein- oder durchgefärbtes (Dekor)-Papier als Trägergewebe für die erfindungsgemäße Laminat-Deckschicht verwendet werden. Selbstverständlich wird die Verpressung in jedem Fall so ausgeführt, dass die Seite der Laminat-Deckschicht, auf die der Oberflächenanstrich aufgebracht wurde, zur Außenseite des Laminats weist. Direkt nach der Trocknung der erfindungsgemäßen Deckschichten oder direkt nach dem Verpressen des erfindungsgemäßen Laminats kann auf diesen, ggf. durch Prägen, eine dreidimensionale Oberflächenstruktur erzeugt werden, wobei feine Strukturen, wie sie z.B. für Furniere typisch sind, in die Nutzschicht der Deckschicht dauerhaft eingebracht werden können.

Die durch das erfindungsgemäße Verfahren erhältlichen Schichtaufbauten zeigen gute akustische Eigenschaften, insbesondere eine wirksame Körper-, Tritt- und Gehschalldämmung. Weiterhin weisen diese Deckschichten verbesserte Oberflächeneigenschaften auf, wobei vor allem, im Vergleich zu herkömmlichen, dem Stand der Technik entsprechenden elastischen Fußbödenpaneelen (z.B. PVC-Böden), die Abriebbeständigkeit deutlich erhöht ist und durch den Zusatz von harten Partikel im Oberflächenanstrich noch weiter verbessert werden kann. Schließlich weisen die durch das erfindungsgemäße Verfahren erhältlichen Deckschichten verbesserte Eigenschaften hinsichtlich Schäl-, Spalt- und Abriebfestigkeit auf, was durch die physikalische und, bevorzugt, chemische Verbundhaftung der gesamten Struktur erzielt wird.

Die sich aus dem Oberflächenanstrich ergebende Außenschicht (Nutzschicht) besteht nach der Quervernetzung des verwendeten Polymers, Co-Polymers oder Hybrid-Polymers durch Reaktion mit dem Quervernetzer aus den eingesetzten Polymeren, die je nach eingesetztem Quervernetzer über verschiedene Brücken aneinander gebunden sind. Die sich aus der Quervernetzung und der Verwendung von Hybrid-polymeren ergebende physikalisch und chemisch vernetzten Polymere sind durch Eindringen des Oberflächenanstrichs in das Präimpregnat und die daraus resultierende Bildung von Hybrid-Polymeren und/oder weitere Reaktion über den im Oberflächenanstrich enthaltenen Quervernetzer auch an geeigneten Polymere der zur Imprägnierung eingesetzten Harzmischung gebunden. Hierdurch wird eine feste Bindung der durch den Oberflächenanstrich erhaltenen Nutzschicht mit dem aus der Imprägnierung erhaltenen Kern (Funktionsschicht) gewährleistet. Die als Funktionsschicht wirkende Kernimprägnierung absorbiert innerhalb des Verbundes mechanische Stöße und hat einen wirksamen trittschalldämmenden Effekt. Die nach außen gerichtete, aus dem Oberflächenanstrich resultierende Schicht verleiht der Oberfläche Chemikalienbeständigkeit, hohe Kratzfestigkeit, hohe Abriebbeständigkeit sowie eine überaus angenehme Haptik.

Ohne auf die folgenden Beispiele beschränkt sein zu wollen, wird die Erfindung durch sie näher charakterisiert.

### Referenzbeispiel 1

Imprägnierung mit einer wässrigen Dispersion umfassend ein nicht funktionelles Polyurethan (ohne reaktive Endgruppen) und ein nicht funktionelles Polyacrylat (ebenfalls ohne reaktive Endgruppen) unter Zusatz eines Quervernetzers zur Ausbildung eines separaten Polyharnstoffnetzwerks und Herbeiführung eines Polyurethan-Polyacrylat-Polyharnstoff "interpenetrating network".

Harzmischung für die Kernimprägnierung:

| | |
|---|---|
| PUD: Bayer Impranil DLC-F | 750 g |
| Polyacrylat: Helios Domemul 7960 | 250 g |
| Wasser | 100 g |
| Quervernetzer Polyisocyanat Dancure 101 | 100 g |
| Netz/Trennmittel Deurowood MA7 | 10 g |

Tauchimprägnierung

| | |
|---|---|
| Nassimprägnierung 1: | glatt oben/glatt unten, 20 Sekunden Vortrocknung |
| Nassimprägnierung 2: | 600 µm/ 700 µm (Abstand der Rakelrillen der Handrakel), 90 Sekunden Trocknung |

Ergebnis:
Endgewicht: 128 g/m²
Restfeuchte: 6,5 %
Harzauftrag: 97,7 g/m²
→ Starkes Kleben am Pressblech, sichtbare und flächige Transparenzstörungen

### Referenzbeispiel 2

Imprägnierung mit einer wässrigen Dispersion umfassend ein Polyurethan/Polyacrylat-Hybrid-Polymer, wobei das Polyurethan im Polyurethan/Polyacrylat-Hybrid-Polymer über NH₂-Gruppen quervernetzbar ist; Verwendung von korundgefülltem Overlay 25 g/m² Flächengewicht mit 3 g/m² Korund

Harzmischung Kernimprägnierung

| | |
|---|---|
| PUR/Polyacrylat-Hybrid: Ecronova ET 2012 | 1000 g |
| Wasser | 200 g |
| Netz/Trennmittel Deurowood MA7 | 10 g |

Tauchimprägnierung
Nassimprägnierung 1: 800 µm/800 µm, 20 Sekunden Vortrocknung
Nassimprägnierung 2: 800 µm/800 µm, 145 Sekunden Trocknung

Ergebnis:
Endgewicht: 125 g/m²
Restfeuchte: 4,3 %
Harzauftrag: 95,5 g/m²,
→ Vollständiges Verklebung am Pressblech, mechanisch nicht mehr vom Pressblech trennbar, Pressblech zerstört und absolut unbrauchbares Produkt

### Beispiel 1

Imprägnierung mit einer wässrigen Dispersion umfassend ein über NH₂-Gruppen quervernetzbares Polyurethan Pre-Polymer; Oberflächenanstrich mit einer wässrigen Dispersion umfassend ein über -OH-Gruppen vernetzbares und zusätzlich selbstvernetzendes Polyacrylat

Harzmischung für die Kernimprägnierung:

| | |
|---|---|
| PUD: Ecronova ET 4075 | 1000 g |
| Wasser | 150 g |
| Quervernetzer Bayhydur XP 2655 | 20 g |
| Netz/Trennmittel Deurowood MA7 | 10 g |

Tauchimprägnierung
Nassimprägnierung 1: 500 µm/500µm, 20 Sekunden Vortrocknung
Nassimprägnierung 2: 500 µm/500µm, 90 Sekunden Trocknung

Harzmischung für den Oberflächenanstrich

| | |
|---|---|
| Polyacrylat Ecronova Ecrylic RA646H | 1000 g |
| Wasser | 200 g |
| Quervernetzer Bayhydur XP 2655 | 100 g |
| Netz/Trennmittel Deurowood MA7 | 10 g |

Oberfl ächenanstrich
400µm, 110 Sekunden Trocknung

Ergebnis:
Endgewicht: 115 g/m²
Restfeuchte: 2,6 %
Harzauftrag: 90 g/m², Kern 58 g/m², Oberfläche 32 g/m²
   → Kein Kleben am Blech, transparent

### Beispiel 2

Imprägnierung mit einer wässrigen Dispersion umfassend ein über NH₂-Gruppen quervernetzbares Polyurethan Pre-Polymer; Oberflächenanstrich mit einer wässrigen Dispersion umfassend ein über -OH-Gruppen vernetzbares und zusätzlich selbstvernetzendes Polyacrylat; Verwendung von korundgefülltem Overlay 25 g/m² Flächengewicht mit 3 g/m² Korund

Harzmischung Kernimprägnierung

| | |
|---|---|
| PUD: Ecronova ET 4075 | 1000 g |
| Wasser | 150 g |
| Quervernetzer Bayhydur XP 2655 | 20 g |
| Netz/Trennmittel Deurowood MA7 | 10 g |

Tauchimprägnierung
Nassimprägnierung 1: 800 µm/800 µm, 20 Sekunden Vortrocknung
Nassimprägnierung 2: 800 µm/800 µm, 110 Sekunden Trocknung

Harzmischung Oberflächenanstrich

| | |
|---|---|
| Polyacrylat Ecronova Ecrylic RA646H | 1000 g |
| Wasser | 200 g |
| Quervernetzer Bayhydur XP 2655 | 100 g |
| Mikrokorund WCA5 | 100 g |
| Netz/Trennmittel Deurowood MA7 | 10 g |

Oberflächenanstrich
600 µm, 90 Sekunden Trocknung

Ergebnis:
Endgewicht: 123,4 g/m²
Restfeuchte: 2,3 %
Harzauftrag: 96 g/m², Kern 56 g/m², Oberfläche 40 g/m²
   → Kein Kleben am Blech, transparent
   → Abriebbeständigkeit 1.700 Umdrehungen nach DIN 13329
   → Mikrokratzbeständigkeit MSR-A2 (Glanzgradabbau)
   → MSR-B3 (Mikrozerkratzung)

### Beispiel 3

Imprägnierung mit einer wässrigen Dispersion umfassend ein Polyurethan/Polyacrylat-Hybrid-Polymer, wobei das Polyurethan im Polyurethan/Polyacrylat-Hybrid-Polymer über NH₂-Gruppen quervernetzbar ist; Oberflächenanstrich mit einer wässrigen Dispersion umfassend ein Polyacrylat und ein Polyurethan/Polyacrylat-Hybrid-Polymer, wobei das Polyacrylat -OH-Gruppen quervernetzbar und selbstvernetzend ist, und das Polyurethan im Polyurethan/Polyacrylat-Hybrid-Polymer über NH₂-Gruppen quervernetzbar ist; Verwendung von korundgefülltem Overlay 25 g/m² Flächengewicht mit 3 g/m² Korund

Harzmischung Kernimprägnierung

| | |
|---|---|
| PUR/Polyacrylat-Hybrid: Ecronova ET 2012 | 1000 g |
| Wasser | 200 g |
| Netz/Trennmittel Deurowood MA7 | 10g |

Tauchimprägnierung
Nassimprägnierung 1: 800 µm/800 µm, 20 Sekunden Vortrocknung
Nassimprägnierung 2: 800 µm/800 µm, 145 Sekunden Trocknung

Harzmischung Oberflächenanstrich

| | |
|---|---|
| Polyacrylat Ecronova Ecrylic RA646H | 900 g |
| PUR-Polyacrylat-Hybrid: Ecronova ET 2012 | 100 g |
| Quervernetzer Bayhydur XP 2655 | 100 g |
| Mikrokorund WCA5 | 100 g |
| Netz/Trennmittel Deurowood MA7 | 10 g |

Oberflächenanstrich
400 µm, 100 Sekunden Trocknung

Ergebnis:
Endgewicht: 155 g/m²
Restfeuchte: 3,3 %
Harzauftrag: 125 g/m²,Kern 95 g/m²,Oberfläche 30 g/m²
→ Kein Kleben am Blech, transparent
→ Abriebbeständigkeit 1.350 Umdrehungen nach DIN 13329
→ Mikrokratzbeständigkeit MSR-A3 (Glanzgradabbau)
→ MSR-B3 (Mikrozerkratzung)

### Beispiel 4

Imprägnierung mit einer wässrigen Dispersion umfassend ein Polyurethan/Polyacrylat-Hybrid-Polymer, wobei das Polyurethan im Polyurethan/Polyacrylat-Hybrid-Polymer über NH₂-Gruppen quervernetzbar ist; Oberflächenanstrich mit einer wässrigen Dispersion umfassend ein Polyacrylat und ein Polyurethan/Polyacrylat-Hybrid-Polymer, wobei das Polyacrylat -OH-Gruppen quervernetzbar und selbstvernetzend ist, und das Polyurethan im Polyurethan/Polyacrylat-Hybrid-Polymer über NH₂-Gruppen quervernetzbar ist; Verwendung von korundgefülltem Overlay 25 g/m² Flächengewicht mit 3 g/m² Korund

Harzmischung Kernimprägnierung

| | |
|---|---|
| PUR/Acyrlat-Hybrid: Ecronova ET 2012 | 1000 g |
| Wasser | 200 g |
| Netz/Trennmittel Deurowood MA7 | 10 g |

Nassimprägnierung 1: 800 µm/800 µm, 20 Sekunden Vortrocknung
Nassimprägnierung 2: 800 µm/800 µm, 60 Sekunden Zwischentrocknung
Nassimprägnierung 3: 800 µm/800 µm, 150 Sekunden Zwischentrocknung

Harzmischung Oberflächenanstrich

| | |
|---|---|
| Polyacrylat Ecronova Ecrylic RA646H | 800 g |
| PUD: Ecronova ET 2012-1036-2 | 200 g |
| Quervernetzer Bayhydur XP 2655 | 100 g |
| Mikrokorund WCA5 | 100 g |
| Netz/Trennmittel Deurowood MA7 | 10 g |

Oberflächenanstrich
einseitig 500 µm, 130 Sekunden Trocknung

Ergebnis:
Endgewicht: 142 g/m²
Restfeuchte: 2,5 %
Harzauftrag: 123 g/m²,Kern 92 g/m², Oberfläche 31 g/m²
→ Kein Kleben am Blech, transparent
→ Abriebbeständigkeit 1.400 Umdrehungen nach DIN 13329
→ Mikrokratzbeständigkeit MSR-A2 (Glanzgradabbau)
→ MSR-B3 (Mikrozerkratzung)

### Beispiel 5:

Imprägnierung mit einer wässrigen Dispersion umfassend ein nicht funktionelles Polyurethan (ohne reaktive Endgruppen); Oberflächenanstrich mit einer wässrigen Dispersion umfassend ein über -OH-Gruppen vernetzbares und zusätzlich selbstvernetzendes Polyacrylat; Verwendung von korundgefülltem Overlay 25 g/m² Flächengewicht mit 3 g/m² Korund

Harzmischung für die Kernimprägnierung:

| | |
|---|---|
| PUD: Impranil DLC-F | 1000 g |
| Wasser | 100 g |
| Netz/Trennmittel Deurowood MA7 | 10 g |

Tauchimprägnierung
Nassimprägnierung 1: 500 µm/500µm, 20 Sekunden Vortrocknung
Nassimprägnierung 2: 500 µm/500µm, 110 Sekunden Trocknung

Harzmischung für den Oberflächenanstrich

| | |
|---|---|
| Polyacrylat Ecronova Ecrylic RA646H | 1.000 g |
| Wasser | 50 g |
| Quervernetzer Bayhydur XP 2655 | 100 g |
| Netz/Trennmittel Deurowood MA7 | 10 g |
| Mikrokorund WCA5 | 100 g |

Oberflächenanstrich
600µm, 110 Sekunden Trocknung

Ergebnis:
Endgewicht: 134 g/m²
Restfeuchte: 2,8 %
Harzauftrag: 130 g/m²,Kern 79 g/m², Oberfläche 26 g/m²
   → Kein Kleben am Blech, transparent
   → Abriebbeständigkeit 750 Umdrehungen nach DIN 13329
   → Mikrokratzbeständigkeit MSR-A3 (Glanzgradabbau)
   → MSR-B3 (Mikrozerkratzung)

### Beispiel 6:

Imprägnierung mit einer wässrigen Dispersion umfassend ein nicht funktionelles Polyurethan (ohne reaktive Endgruppen); Oberflächenanstrich mit einer wässrigen Dispersion umfassend ein über -OH-Gruppen vernetzbares und zusätzlich selbstvernetzendes Polyacrylat und ein nicht funktionelles Polyurethan (ohne reaktive Endgruppen); Verwendung von korundgefülltem Overlay 25 g/m² Flächengewicht mit 3 g/m² Korund

Harzmischung für die Kernimprägnierung:

| | |
|---|---|
| PUD: Impranil DLC-F | 1000 g |
| Wasser | 150 g |
| Netz/Trennmittel Deurowood MA7 | 10 g |

Tauchimprägnierung
Nassimprägnierung 1: 800 µm/800µm, 20 Sekunden Vortrocknung
Nassimprägnierung 2: 800 µm/800µm, 110 Sekunden Trocknung

Harzmischung für den Oberflächenanstrich

| | |
|---|---|
| Polyacrylat: Ecronova Ecrylic RA646H | 900 g |
| PUD: Impranil DLC-F | 100 g |
| Wasser | 50 g |
| Quervernetzer Bayhydur XP 2655 | 100 g |
| Netz/Trennmittel Deurowood MA7 | 10 g |
| Mikrokorund WCA5 | 100 g |

Oberflächenanstrich
400µm, 90 Sekunden Trocknung

Ergebnis:
Endgewicht: 134 g/m²
Restfeuchte: 2,0 %
Harzauftrag: 131 g/m², Kern 80 g/m², Oberfläche 26 g/m²
   → Kein Kleben am Blech, transparent
   → Abriebtest 780 Umdrehungen nach DIN EN 13329
   → Mikrozerkratzung MSR-A2 (Glanzgradabbau)
   → MSR-B3 (Mikrozerkratzung)

## Patentansprüche

1. Verfahren zur Herstellung einer elastischen Laminat-Deckschicht umfassend die Schritte:
a. Imprägnieren eines Trägergewebes mit einer ersten geeigneten Harzmischung,
b. einseitiger Auftrag einer zweiten Harzmischung als Oberflächenanstrich umfassend einen Quervernetzer sowie ein über reaktive Endgruppen quervernetzbares Pre-Polymer,
c. Quervernetzung des über reaktive Endgruppen quervernetzbaren Pre-Polymers unter Bildung und einer festen physikalischen Verbindung zwischen der als Vorimprägnat eingebrachten Funktionsschicht und der als Oberflächenanstrich aufgebrachten Nutzschicht und
d. Trocknung der elastischen Laminat-Deckschicht.

2. Verfahren nach Anspruch 1, wobei die über reaktive Endgruppen ausgewählt sind aus der Gruppe bestehend aus Amino-, Hydroxy-, Carboxy/Carboxylat- und Mercaptofunktionen.

3. Verfahren nach einem der Ansprüche 1-2 umfassend eine Zwischentrocknung des imprägnierten Trägergewebes vor Auftrag der zweiten Harzmischung.

4. Verfahren nach einem der Ansprüche 1-3, wobei das Trägergewebe ein Overlay-Papier aus alpha-Cellulose ist.

5. Verfahren nach einem der Ansprüche 1-3, wobei das Trägergewebe ein bedrucktes, gefärbtes oder durchgefärbtes Dekorpapier ist.

6. Verfahren nach einem der Ansprüche 1-5, wobei die erste und die zweite Harzmischung wässrige oder organische, bevorzugt wässrige, Dispersionen sind und ggf. weitere Hilfsstoffe, wie etwa Netz/Trennmittel oder Entschäumer, umfassen.

7. Verfahren nach einem der Ansprüche 1-6, wobei die erste und/oder die zweite Harzmischung harte Partikel aus Korund, Siliciumcarbid oder Titannitrid mit einer durchschnittlichen Partikelgröße von 0,5 bis 150 µm umfasst.

8. Verfahren nach einem der Ansprüche 1-7, wobei nach dem Auftrag der ersten und/oder der zweiten Harzmischung und vor der jeweiligen (Zwischen)-Trocknung harte Partikel aus Korund, Siliciumcarbid oder Titannitrid mit einer durchschnittlichen Partikelgröße von 0,5 bis 150 µm aufgestreut werden.

9. Verfahren nach einem der Ansprüche 1-8, wobei die erste, zur Imprägnierung des Trägergewebes geeignete Harzmischung ein Melaminharz, ein Polyurethan, ein Polyacrylat und/oder ein Polyurethan/Polyacrylat-Hybrid-Polymer sowie, optional, einen Quervernetzer umfasst.

10. Verfahren nach Anspruch 9, wobei das Polyurethan und das Polyacrylat über reaktive Endgruppen quervernetzbar ist.

11. Verfahren nach einem der Ansprüche 1-10, wobei das über reaktive Endgruppen quervernetzbare Pre-Polymer in der zweiten, für den Oberflächenanstrich verwendeten Harzmischung ein Polyurethan, ein Polyacrylat oder ein Polyurethan/Polyacrylat-Hybrid-Polymer ist.

12. Verfahren nach einem der Ansprüche 10 oder 11, wobei das Polyurethan über NH₂- und das Polyacrylat über OH- Gruppen quervernetzbar ist.

13. Verfahren nach einem der Ansprüche 1-12, wobei die zweite Harzmischung frei von durch UV-Strahlung zur Vergilbung neigenden Pre-Polymeren ist.

14. Verfahren nach einem der Ansprüche 1-13, wobei die erste und die zweite Harzmischung frei von Antioxidantien, Weichmachern, und UV-Stabilisatoren sind.

15. Verfahren nach einem der Ansprüche 1-14, wobei der Quervernetzer ein Isocyanat, ein Epoxid oder ein Aziridin ist.

16. Elastische Laminat-Deckschicht herstellbar nach einem Verfahren gemäß einem der Ansprüche 1-15.

17. Verwendung der elastischen Laminat-Deckschicht nach Anspruch 16 zur Herstellung eines Schichtaufbaus, wobei die Seite der Laminat-Deckschicht, auf die der Oberflächenanstrich aufgebraucht wurde, zur Außenseite des Schichtaufbaus weist.

18. Verwendung nach Anspruch 17, wobei das Laminat aus der Laminat-Deckschicht nach Anspruch 16, ggf. einem separaten Dekorpapier, einem Plattengrundkörper und ggf. einem Gegenzug aufgebaut ist.

## Claims

1. Process for the production of an elastic laminate cover-layer comprising the steps:
a. impregnating a carrier fabric with a first suitable resin mixture,
b. applying one-sidedly a second resin mixture as surface coating comprising a crosslinker as well as a prepolymer that is cross-linkable via reactive end-groups,
c. crosslinking the prepolymer that is cross-linkable via reactive end-groups by forming a solid physical bond between the functional-layer introduced as pre-impregnate and the wear-layer applied as surface coating and
d. drying of the elastic laminate cover-layer.

2. Process according to claim 1, whereby the reactive end-groups are selected from the group consisting of amino-, hydroxy-, carboxy/carboxylate-, and mercapto-functions.

3. Process according to one of claims 1-2 comprising an intermediate drying of the impregnated carrier-fabric before applying the second resin mixture.

4. Process according to one of claims 1-3, whereby the carrier-fabric is an overlay paper out of alpha-cellulose.

5. Process according to one of claims 1-3, whereby the carrier-fabric is a printed, coloured, or through-coloured decorative paper.

6. Process according to one of claims 1-5, whereby the first and the second resin mixture are aqueous or organic, preferably aqueous, dispersions and optionally comprise further excipients, such as wetting/separating agents or defoamers.

7. Process according to one of claims 1-6, whereby the first and/or the second resin mixture contains hard particles of corundum, silicon carbide or titanium nitride with an average particle size of 0.5 to 150 µm.

8. Process according to one of claims 1-7, whereby, after the application of the first and/or the second resin mixture and before the respective (intermediate) drying, hard particles of corundum, silicon carbide, or titanium nitride with an average particle size of 0.5 to 150 µm are distributed.

9. Process according to one of claims 1-8, whereby the first resin mixture that is suitable for the impregnation of the carrier-fabric comprises a melamine resin, a polyurethane, a polyacrylate and/or a polyurethane/polyacrylate-hybrid-polymer, and, optionally, a crosslinker.

10. Process according to claim 9, whereby the polyurethane and the polyacrylate are cross-linkable via reactive end-groups.

11. Process according to one of claims 1-10, whereby the prepolymer that is cross-linkable via reactive end-groups in the second resin mixture, which is used for the surface-coating, is a polyurethane, a polyacrylate, or a polyurethane/polyacrylate-hybrid-polymer.

12. Process according to one of claims 10 or 11, whereby the polyurethane is cross-linkable via NH₂-groups and the polyacrylate is cross-linkable via OH-groups.

13. Process according to one of claims 1-12, whereby the second resin mixture is free of pre-polymers that have a tendency towards yellowing with UV radiation.

14. Process according to one of claims 1-13, whereby the first and the second resin mixture are free of antioxidants, plasticizers, and UV-stabilizers.

15. Process according to one of claims 1-14, whereby the crosslinker is an isocyanate, an epoxide, or an aziridine.

16. Elastic laminate cover-layer producible by a process according to one of claims 1-15.

17. Use of the elastic laminate cover-layer according to claim 16 for the production of a layered structure, whereby the side of the laminate cover-layer, on which the surface coating is applied, faces the outside of the layered assembly.

18. Use according to claim 17, whereby the laminate is constructed from the laminate cover-layer according to claim 16, optionally a separate decorative paper, a core panel, and, optionally, a backing.

## Revendications

1. Procédé pour la fabrication d'une couche de recouvrement de stratifié élastique comprenant les étapes suivantes :
a. imprégnation d'un tissu de support avec un premier mélange de résines approprié,
b. application sur une face d'un deuxième mélange de résines en guise de revêtement de surface comprenant un agent de réticulation ainsi qu'un pré-polymère réticulable par le biais de groupes terminaux réactifs,
c. réticulation du pré-polymère réticulable par le biais de groupes terminaux réactifs avec production d'une liaison physique solide entre la couche fonctionnelle introduite en guise de pré-imprégné et la couche fonctionnelle appliquée en guise de revêtement de surface et
d. séchage de la couche de recouvrement de stratifié élastique.

2. Procédé selon la revendication 1, selon lequel les groupes terminaux réactifs sont choisis parmi le groupe comprenant des fonctions amino, hydroxy, carboxy/carboxylate et mercapto.

3. Procédé selon une des revendications 1 et 2, comprenant un séchage intermédiaire du tissu de support imprégné avant l'application du deuxième mélange de résines.

4. Procédé selon une des revendications 1 à 3, selon lequel le tissu de support est un papier overlay en cellulose alpha.

5. Procédé selon une des revendications 1 à 3, selon lequel le tissu de support est un papier décoratif imprimé, teinté ou teinté dans la masse.

6. Procédé selon une des revendications 1 à 5, selon lequel le premier et le deuxième mélange de résines sont des dispersions aqueuses ou organiques, de préférence aqueuses, et comprennent éventuellement d'autres adjuvants tels que, par exemple, des agents de réticulation/séparation ou des agents anti-mousse.

7. Procédé selon une des revendications 1 à 6, selon lequel le premier et/ou le deuxième mélange de résines comprennent des particules dures de corindon, de carbure de silicium ou de nitrure de titane d'une taille moyenne de 0,5 à 150 µm.

8. Procédé selon une des revendications 1 à 7, selon lequel, après l'application du premier et/ou du deuxième mélange de résines et avant le séchage (intermédiaire) correspondant, des particules dures de corindon, de carbure de silicium ou de nitrure de titane d'une taille moyenne de 0,5 à 150 µm sont dispersées.

9. Procédé selon une des revendications 1 à 8, selon lequel le premier mélange de résines approprié pour l'imprégnation du tissu de support comprend une résine mélaminée, un polyuréthane, un polyacrylate et/ou un polymère hybride polyuréthane/polyacrylate ainsi que, facultativement, un agent de réticulation.

10. Procédé selon la revendication 9, selon lequel le polyuréthane et le polyacrylate sont réticulables par le biais de groupes terminaux réactifs.

11. Procédé selon une des revendications 1 à 10, selon lequel le pré-polymère réticulable par le biais de groupes terminaux réactifs dans le deuxième mélange de résines utilisé pour le revêtement de surface est un polyuréthane un polyacrylate, ou un polymère hybride polyuréthane/polyacrylate.

12. Procédé selon une des revendications 10 ou 11, selon lequel le polyuréthane est réticulable par le biais de groupes -NH₂ et le polyacrylate par le biais de groupes -OH.

13. Procédé selon une des revendications 1 à 12, selon lequel le deuxième mélange de résines est exempt de pré-polymères ayant tendance à jaunir sous l'effet de rayonnements UV.

14. Procédé selon une des revendications 1 à 13, selon lequel le premier et le deuxième mélange de résines sont exempts d'antioxydants, d'assouplissants et de stabilisants aux UV.

15. Procédé selon une des revendications 1 à 14, selon lequel l'agent de réticulation est un isocyanate, un époxy ou une aziridine,

16. Couche de recouvrement de stratifié élastique pouvant être fabriquée selon un procédé& selon une des revendications 1 à 15.

17. Utilisation de la couche de recouvrement de stratifié élastique selon la revendication 16 pour la fabrication d'une structure en couches, la face de la couche de recouvrement de stratifié sur laquelle le revêtement de surface a été appliqué étant orientée vers la face extérieure de la structure en couches.

18. Utilisation selon la revendication 17, dans laquelle le stratifié est constitué de la couche de recouvrement de stratifié selon la revendication 16, éventuellement d'un papier décoratif séparé, d'un corps de base de plaque et éventuellement d'une contremarche.
